# EUROPEAN PATENT APPLICATION

(11) **EP 1 884 940 A2**
(43) Date of publication of application: **06.02.2008**
(21) Application number: 07015185.7
(22) Date of filing: 02.08.2007
(51) Int. Cl.: G11B 7/007

(54) **Information management method for information recording medium, recording method, and information recording/reproducing apparatus thereby**

(30) Priority: 03.08.2006 JP 2006212196
(71) Applicant: NEC Corporation, Minato-ku Tokyo (JP)
(72) Inventor: Ogawa, Masatsugu, c/o NEC Corporation, Tokyo (JP); Yamanaka, yutaka, c/o NEC Corporation, Tokyo (JP); Ohkubo, Shuichi, c/o NEC Corporation, Tokyo (JP)
(74) Representative: Baronetzky, Klaus

(57) **Abstract**

A recording method of an information recording medium includes: (a) storing management information; (b) reading out the management information; and (c) recording. The information recording medium (10) has two recording layers. A first recording layer (L0) is placed nearer to a source of a laser and a recording direction thereof is from the inner side to the outer side of the information recording medium. A recording direction of a second recording layer (L1) is from the outer side to the inner side. In the (a) storing, management information indicating a recording status of the information recording medium is recorded in a management information area (201) of the information recording medium. In (b) reading out, the management information is read out from the management information area. In (c) recording, recording processing is performed by skipping a part of an area based on the management information.

## Description

### BACKGROUND OF THE INVENTION

### 1. Field of the Invention

The present invention relates to a recording method of an optical disc, and a recording/reproducing apparatus thereby.

### 2. Description of Related Art

Among recordable optical discs, there are some optical discs such that importance is attached to compatibility between each of them and a reproduction-only optical disc (hereinafter referred to as a ROM medium). For example, such discs include a DVD-R (Digital Versatile Disc-Recordable) and a DVD-RW (DVD-ReWritable), and in these days, optical discs having a high compatibility with the ROM medium are discussed also in the HD DVD family. It is often a case where these discs are subjected to processing called finalization after desired data recording is completed because an importance is attached to a compatibility between each of them and the ROM medium. The finalization processing is processing whereby predetermined data is recorded so that an unrecorded area may be eliminated in a predetermined record area. If the finalization processing is performed, the optical disc will have a same physical structure as the ROM medium in which only record marks exist in a predetermined recording area. This processing enables the recordable optical disc to ensure compatibility with a read-only optical disc. However, when performing the finalization processing, the processing takes time in many cases, which has caused a large dissatisfaction for users.

Meanwhile, increasing capacity of the recordable optical discs has been progressed in recent years. Among related contrivances, an optical disc whose storage capacity is doubled by increasing the recording layer from a single layer to double layers has begun to be shipped. With growing a storage capacity, a time required for the finalization processing tends to become larger, and therefore some resolutions are desired.

Moreover, in the DVD-RW and a HD DVD-RW that can record repeatedly many times, a format processing that initializes a medium is required. The format processing is, in its simple definition, processing performed before actual data recording, and includes three processing steps shown below. (1) Initializing management information of a medium. (2) Forming a required area in the medium. (3) Filling a data area corresponding to a desired storage capacity (capacity required by a host apparatus) with record sectors with data attribute. Among them, processing of filling the data area with the record sectors with data attribute shown in (3) has become processing that takes quite a time with increasing density of the optical disc in recent years. Therefore, the users also desire highspeed format processing, similarly as in the finalization processing.

Here, a term of data attribute is presented. An attribute of the record sector will be explained simply. Generally, there are following record areas: a data area where user data is recorded; a read-in area and read-out area that are a sort of guard areas formed to sandwich the data area; and additionally in a case of the dual-layer disc, a middle area that corresponds to a continuation area placed between an L0 layer and an L1 layer. The record sector belonging to each area has information indicating a data attribute, a read-in attribute, a read-out attribute, and a middle area attribute, respectively. Based on these pieces of attribute information, the optical disc apparatus can guess in which area of the optical disc its optical head is located. Incidentally, in the case of HD DVD standard, areas that correspond to the read-in/read-out of the DVD standard are called a data read-in/data read-out, respectively.

Moreover, the record sector is an aggregate of record marks and one sector is composed of data of 2 Kbytes in the optical disc of a DVD system and in the optical disc of a HD DVD system. An address is allocated to each aggregate of the record marks, i.e., each record sector. In addition to the address, the above-mentioned attribute information, etc. are added to the each record sector.

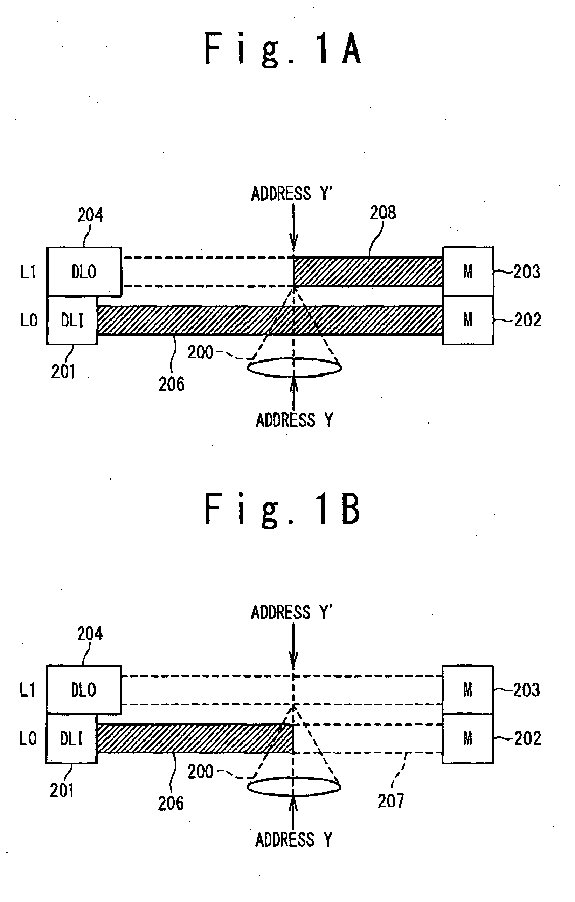

In a dual-layer optical disc, generally, a first recording layer when viewed from a light irradiation side, as shown in FIG. 1A, is designated by an L0 layer, and a second recording layer by an L1 layer. On the L0 layer, data is recorded from a data read-in 201 side (inner side in the radial direction of the disc) toward a middle area 202 side (outer side in the radial direction of the disc). On the L1 layer, data are conversely recorded from a middle area 203 (outer side) toward a data read-out 204 side (inner side). When information is recorded on the L1 layer in such an optical disc, a light beam 200 will penetrate the L0 layer.

As shown in FIG. 1A, when the recording of a user data goes as far as in front of the middle areas 202, 203 and then returns to reach an address Y', there exist only a recorded area 206 and there is no unrecorded area of the L0 layer in a range where the light beam 200 penetrates the L0 layer. However, as shown in FIG. 1B, when a recording position is shifted to the address Y' of the L1 layer at an address Y of the L0 layer (interlayer jump), data is recorded in the area 206 that is on a more inner side than the address Y of the L0 layer, but no data is recorded in an area 207 that is on a more outer side than the address Y. Therefore, the recorded area 206 and the unrecorded area 207 of the L0 layer will be intermingled in a path of the light beam 200. An optical intensity reaching the L1 layer varies depending on whether there are only recorded areas of the L0 layer in the range where the light beam 200 penetrates the L0 layer or there are unrecorded areas. That is, a record sensibility of the L1 layer will vary depending on a record state of the L0 layer. Incidentally, the address Y' of the L1 layer that is a destination address of an interlayer jump from the address Y of the L0 layer is a complement number of the address Y.

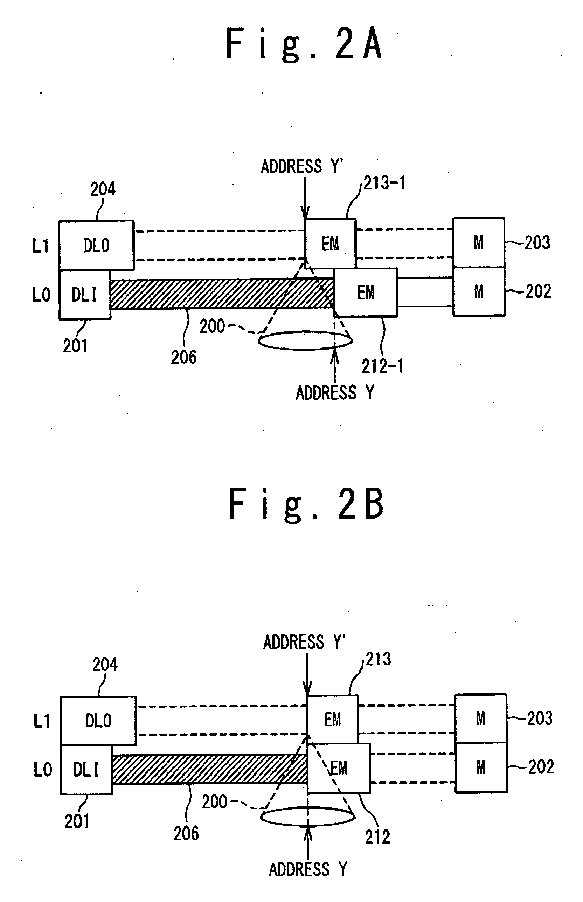

In order to circumvent this, for example,
when performing recording on the L1 layer after recording on the L0 layer, in a current dual-layer DVD-R, it is contrived that addresses are so allocated that there is no unrecorded area in the L0 layer in the range where the light beam 200 penetrates the L0 layer. That is, as shown in FIG. 2A, the position of the address Y' of the L1 layer to which the interlayer jump is made from the address Y of the L0 layer is set to be on a more inner side than the address Y so that there is no unrecorded area of the L0 layer in the range where the light beam 200 penetrates the L0 layer. Therefore, even if middle areas 212, 213 are not formed, when the light beam 200 is irradiated at the position of the address Y' of the L1 layer, only the recorded areas 206 of the L0 layer will exist in the range where the light beam 200 penetrates the L0 layer. However, in case of ROM medium where the light beam 200 enters from below, the position of the address Y' of the L1 layer is set almost right above the address Y of the L0 layer. Therefore, an address allocation as that of the dual-layer DVD-R is disadvantageous from a viewpoint of compatibility with the ROM medium.

In a case of the dual-layer HD DVD-RW currently discussed for its standardization, the address allocation is specified to ensure compatibility with the ROM medium. Because of this, it employs a GAP section formed on the outside of the area that records the user data on the L0 layer. That is, as shown in FIG. 2B, on a more outer side than a position indicated by the address Y at which the interlayer jump takes place from the L0 layer to the L1 layer, the guard areas 212, 213 for preventing the light beam 200 from going to a location without the record mark are formed. This guard area 212 is called an expanded middle area or simply a middle area, and is an area that is required to ensure compatibility with the ROM medium. Now the light beam 200 will penetrate the recorded area 206 and the middle area 212 of the L0 layer to reach the L1 layer, and accordingly a large fluctuation will be eliminated in a record sensitivity of the L1 layer.

At this time, in a state where there are only recorded areas of the L0 layer in the range where the light beam 200 penetrates the L0 layer and there is no unrecorded area, a length (in a radial direction) of the GAP section required to enable stable recording on the L1 layer is defined as clearance in the HD DVD standard. It is about 100 µm in a case of the HD DVD. This also considers a radial runout of the optical disc and a bonding error at a time of manufacture of the dual-layer optical disc.

When making an interlayer jump to the L1 layer and performing recording on the L1 layer after recording on the L0 layer, the GAP section 212 will be formed in an area corresponding to this 100 µm clearance, and subsequently recording on the L1 layer will be done. During formation of this GAP section 212, the optical disc apparatus cannot record the user data. When viewed from the host apparatus, recording on the L1 layer is halted during this period and the host apparatus must wait. Shortening of this wait time is also desired.

Japanese Laid-Open Patent Application (JP-P2002-216361A) discloses a technique related to the interlayer jump in the optical disc having a plurality of recording layers on one side thereof. Tracks on which information can be recorded are formed on the each recording layer of this optical disc. This track substantially includes a groove or land. In this optical disc, when viewed from a light incident side,
a data area of a front recording layer is wider than a data area of a back recording layer. That is, a radius position of an outermost circumference of the recordable area of the front recording layer when viewed from the light incident side is located on a more outer side than a radius position of the outermost circumference of the recordable area of the back recording layer; and a radius position of the innermost circumference of the recordable area of the front recording layer is located on a more inner side than a radius position of the innermost circumference of the recordable area of the back recording layer.

Japanese Laid-Open Patent Application (JP-P2004-342181A) discloses an information recording method whereby recording is performed in an information recording medium that has a plurality of recording layers each having a data area for recording the user data. The information recording medium has a first recording layer that serves as a reference to determine a range of positions of the data area of each recording layer and a second recording layer other than this first recording layer. This information recording method specifies recording such that when the data recording is completed in compliance with a record request of the user data, if the data recording ends on the first recording layer, information concerning the information recording medium to be considered as a one-layer medium is recorded in the first recording layer. It is specified that the information of consideration as the one-layer medium should be recorded in the read-in area of the first recording layer of the information recording medium.

Japanese Laid-Open Patent Application (JP-P2005-529440A) discloses a technique related to a high-density multilayer optical disc in which a plurality of recording layers are formed. The high-density multilayer optical disc includes at least one spare area and at least one specific area. The spare area is partitioned and allocated to the plurality of recording layers, respectively, for defect management. The specific area is included in at least one of the plurality of recording layers and includes management information instructing whether the recording layers are used jointly or each recording layer is used as partitioned. This management information is recorded in either or both of disc limitation structure information and disc information that are recorded and managed in the read-in area or read-out area allocated to a partition of each recording layer.

### SUMMARY

As described above, shortening of processing time of finalization, formatting, and interlayer jump as well as smooth switching to L1 layer recording after L0 layer recording are desired, especially in a dual-layer optical disc.

An exemplary object of the present invention is to provide a method for recording on an information recording medium that shortens a processing time, and an information recording and reproducing apparatus therefore.

According to an exemplary aspect of the present invention, a recording method of an information recording medium comprising: (a) storing, (b) reading out, and (c) recording. In the (a) storing, management information indicating a recording status of the information recording medium is stored by recording the management information on a management information area of the information recording medium. The information recording medium has two recording layers. The first recording layer is placed nearer to a source of a laser irradiated to the information recording medium and a recording direction thereof is from an inner side to an outer side of the information recording medium. The recording direction of the second recording layer is from the outer side to the inner side. In the (b) reading out, the management information is read out from the management information area. In the (c) recording, data on the information recording medium is recorded by skipping a recording processing to a part of the information recording medium based on the management information.

According to another exemplary aspect of the present invention, an information recording and reproducing apparatus includes: an optical head configured to record and reproduce by irradiating a beam to an information recording medium, wherein the information recording medium has a first recording layer placed nearer to the optical head and a recording direction thereof is from an inner side to an outer side in a radial direction of the information recording medium and a second recording layer a recording direction thereof is from the outer side to the inner side; a control unit configured to record management information indicating a recording status of the information recording medium to a management information are of the information recording medium through the optical head; a recording status information read out unit configured to read out the management information from the management information area by using a reproduction signal outputted from the optical head; and a processing determination unit configured to determine recording processing in which recording to a part of the information recording medium is skipped.

According to the present invention, a method for recording on an information recording medium that can shorten times of processing of finalization, formatting, and interlayer jump and the information recording and reproducing apparatus thereby can be provided.

Moreover, according to the present invention, a method for recording on the information recording medium that enables the recording to switch to L1 layer recording after L0 layer recording, especially in a dual-layer optical disc, and the information recording and reproducing apparatus thereby can be provided.

### BRIEF DESCRIPTION OF THE DRAWINGS

FIGS. 1A and 1B are diagrams for explaining a relation between a light beam and an address in a dual-layer optical disc;
FIGS. 2A and 2B are diagrams for explaining a relation between the light beam and the address in the dual-layer optical disc;
FIG. 3 is a diagram showing an outline configuration of an information recording/reproducing apparatus according to an embodiment of the present invention;
FIG. 4 is a diagram showing a structure of a dual-layer optical disc for this apparatus;
FIG. 5 is a diagram showing one example of an address arrangement of this optical disc;
FIG. 6 is a diagram showing one example of management information of this optical disc;
FIG. 7 is a flowchart showing a processing procedure of finalization of this optical disc;
FIGS. 8A and 8B are diagrams showing an example of address arrangement of the optical disc in the finalization;
FIG. 9 is a flowchart showing a procedure of formatting thereof;
FIGS. 10A and 10B are diagrams showing one example of address arrangement of the optical disc in this format;
FIG. 11 is a flowchart showing a processing procedure of interlayer jump thereof; and
FIGS. 12A, 12B, and 12C are diagrams showing one example of address arrangement of the optical disc in this interlayer jump.

### EXEMPLARY EMBODIMENTS

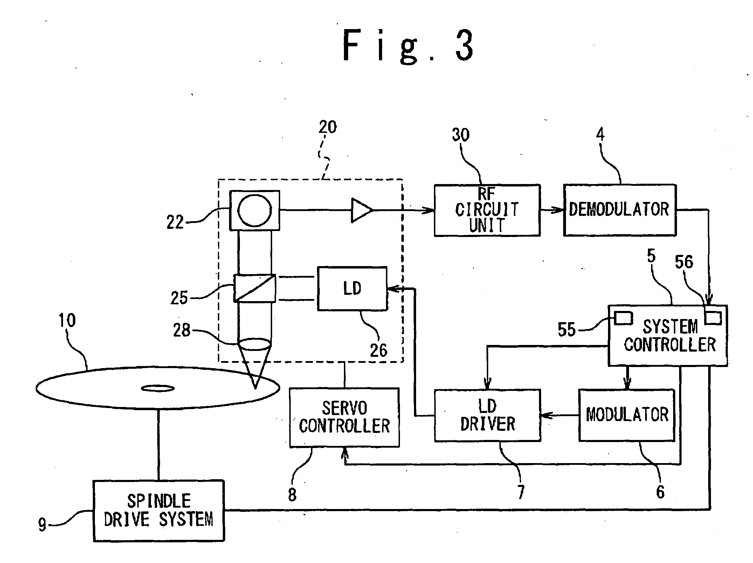

Referring to the drawings, exemplary embodiments for putting the present invention into practice will be described. FIG. 3 shows a block diagram of an information recording/reproducing apparatus according to an exemplary embodiment of the present invention. The information recording/reproducing apparatus that records information on an optical disc 10 and reproduces information from the optical disc 10 includes a spindle drive system 9, an optical head 20, and an RF circuit unit 30, a demodulator 4, a system controller 5, a modulator 6, an LD driver 7, and a servo controller 8.

The spindle drive system 9 drives the optical disc 10. The optical head 20 is equipped with a laser diode (LD) 26, a beam splitter 25, an objective lens 28, and a photodetector unit 22. A light beam emitted from the laser diode (LD) 26 is reflected by the beam splitter 25, and is irradiated onto the optical disc 10 through the objective lens 28. A reflected light reflected by the optical disc 10 is focused by the objective lens 28, is transmitted through the beam splitter 25, and is detected by the photodetector unit 22. A signal detected by the photodetector unit 22 is outputted to the RF circuit unit 30. In the present embodiment, for the optical head 20, one that had an LD wavelength of 405 nm and NA (numerical aperture) of 0.65 has been used.

The RF circuit unit 30 performs processing of filtering, etc. on the inputted signal, and outputs the processing result to the demodulator 4. In the present embodiment, the RF circuit unit 30 includes a Viterbi decoder for PR (12221). The demodulator 4 demodulates a data string signal outputted from the RF circuit unit 30 and outputs it to the system controller 5. The modulator 6 modulates a signal to be recorded that is supplied from the system controller 5 and outputs it to the LD driver 7. Based on the modulated signal to be recorded that is inputted from the modulator 6, the LD driver 7 drives the laser diode 26 and records data on the optical disc 10. The servo controller 8 controls a servo signal for controlling the optical head 20.

In response to an instruction of a host apparatus (not illustrated), the system controller 5 takes in demodulated data from the demodulator 4, and outputs data that is to be recorded to the modulator 6. The system controller 5 supervises the entire information recording/reproducing apparatus by controlling the spindle drive system 9, servo controller 8, and the like. Moreover, the system controller 5 is equipped with a record state information reading unit 55 and a processing determination unit 56. The record state information reading unit 55 takes out record state information currently recorded on the optical disc 10 based on the demodulated data. The processing determination unit 56 determines processing of the interlayer jump, finalization, and formatting based on the information read by the record state information reading unit 55.

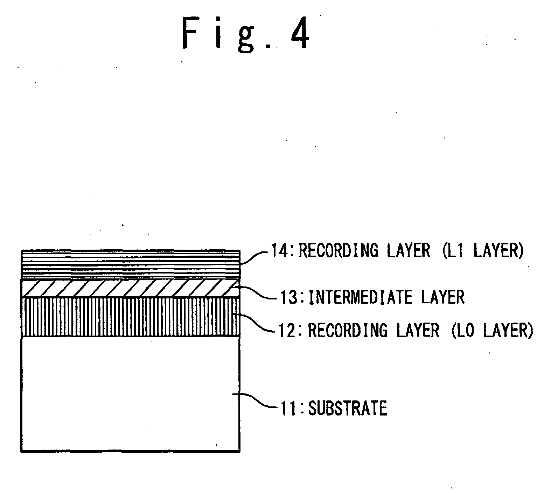

The optical disc 10 has a layered structure, as shown in FIG. 4. A guide groove (not shown) called a pregroove is formed on a disc substrate 11. The information recording/reproducing apparatus, i.e., the optical disc apparatus, is enabled to scan a light beam along this guide groove at the time of recording and reproduction. A recording layer 12 on which record marks can be formed, i.e., an L0 layer, is layered on this substrate 11. A transparent intermediate layer 13 is layered on the L0 layer. Further, a second recording layer 14, i.e., an L1 layer, is layered on the intermediate layer 13. Although both the L0 layer and the L1 layer are each described as being a single layer in FIG. 4, actually each of them has a multilayer structure. The light beam is irradiated from below this optical disc 10.

For the optical disc 10 explained in the present embodiment, a transparent substrate 0.6 mm thick and 12 cm in diameter made of polycarbonate is used. For a physical format, an in-groove format having a bit pitch of 0.15 µm and a track pitch of 0.4 µm is used. The in-groove format means a format such that the format is made up of a hill (groove) and a trench (land) when viewed from an incident light side of the groove and recording is done on the groove section of the two sections. The format in this case means a format of a physical structure of the optical disc and differs in its meaning from format processing described before. The format processing is processing to prepare the optical disc having a physical format so that it can be used logically.

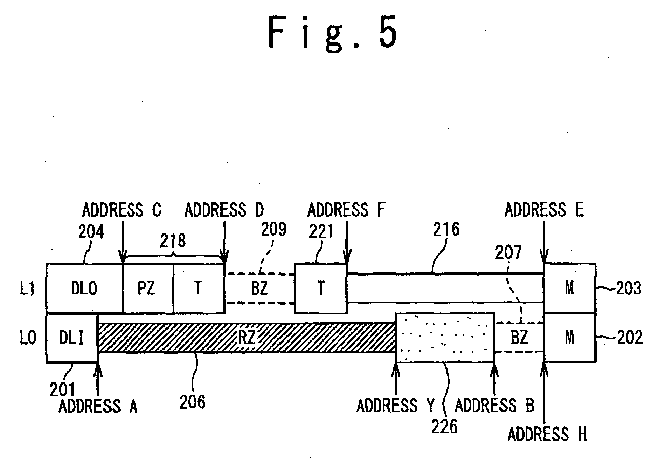

As schematically shown in FIG. 5, a recording layer of the optical disc is divided into areas logically and managed as divided. The L0 layer includes a data read-in (DLI) 201 on its innermost side and a middle area (M) 202 on its outermost side. The data read-in 201 is equipped with a record sector with read-in attribute, while the middle area 202 is equipped with a record sector with middle area attribute. An area sandwiched between the data read-in 201 and the middle area 202 is a user data area that records user data. The user data area is equipped with a record sector with data attribute, which is managed after divided into an unrecorded area (BZ: Blank zone) 207 that records no user data and a recorded area (RZ: R zone) 206 that records user data. Moreover, regarding the user data area, there is a case where an area 226 having recorded the user data before is managed. On the L0 layer, user data is recorded from the inner side of the user data area toward the outer side in the radial direction of the disc.

The L1 layer includes a middle area 203 on an outermost side thereof and a data read-out (DLO) 204 on an innermost side thereof. The data read-out 204 is equipped with a record sector with read-out attribute, and the middle area 203 is equipped with the record sector with middle area attribute. The user data is recorded on the area sandwiched between the middle area 203 and the data read-out 204. This user data area is equipped with the record sector with data attribute, and is managed divided into a recorded area 216 recording user data and unrecorded area 209 recording no user data. On the L1 layer, the user data is recorded from the outer side of the user data area toward the inner side thereof.

In HD DVD, there is a case where an additional read-out area 218 is provided adjacent to the outer side of the data read-out 204, the fixed read-out area described above, on the L1 layer. The additional read-out area 218 includes a padding zone (PZ) and a terminator (T). The terminator is an area where the read-out attribute exists, while the padding zone is an area where the read-out attribute and the data attribute are intermingled. This structure is one example of the additional read-out area 218. Since the HD DVD-RW can be formatted many times and be used after that, it does not necessarily come with an address arrangement as shown in FIG. 5. It is appropriate to consider the additional read-out area 218 as a recording area that includes only the read-out attribute and data attribute continuously connecting from the fixed read-out area 204.

Moreover, there is also a case where an expanded middle area may be formed in an area sandwiched between the data read-in 201/data read-out 204 and the middle areas 202, 203. The expanded middle area is equipped with a record sector with the middle area attribute, and like the above-described middle areas 202, 203, indicates the terminal point of the user area of the L0 layer effective until the expanded middle area is detected and a starting point of the user data area of the L1 layer. That is, this indicates that recording of the user data switches to the L1 layer from the L0 layer. An original function of the middle area is something like a guard to prevent the light beam from going to a location without any record mark. That is, in the reproduction-only apparatus of the optical disc, when reproducing the optical disc to the terminal point in the user data area of the L0 layer and subsequently making the interlayer jump to continue reproduction from the starting point of the user data area of the L1 layer, this area serves as an area to prevent the light beam 200 from going to a location without record mark. This is because since the reproduction-only apparatus uses a signal of the record mark for the tracking process, and if the light beam deviates to a position where no record mark exists, the tracking servo is likely to perform no functions and to let it run away out of control.

Reference numerals are given to main positions for description of the present invention and hereafter the present invention will be described using these numerals. Let a potion that is adjacent to an outer side of the data read-in be an address A. The address A represents data recordable head position of the L0 layer. A record end position of the recorded area that is recorded continuously from the address A is designated by an address B. The address B is compared with a recording end position after the L0 layer is recorded continuously from the address A, and an address located on a more outer side than the recording end position is registered as the address B. A data recordable tail position of the L0 layer that is adjacent to the inner side of the middle area 202 of the L0 layer is designated by as an address H. A position of the L1 layer corresponding the address H, namely, a data recordable head position of the L1 layer adjacent to the inner side of the middle area 203 of the L1 layer is designated by an address H'. In a case where the expanded middle area is formed between the data read-in 201/data read-out 204 and the middle areas 202/203, a data recordable head position of the L1 layer that is adjacent to the inner side of the expanded middle area formed on the innermost side is designated by an address E. When the expanded middle area is not formed, the address E shows the address H'.

A data recordable tail position of the L1 layer that is adjacent to the outer side of the data read-out 204 is designated by an address C. The address C shows the final position at which user data can be record on the optical disc 10. An outermost position of the additional read-out area 218 that is formed on the outer side starting from the address C is designated by an address D. An innermost position of an area 216 that is continuously filled with the record sectors with data attribute from the address E, a data recordable head position of the L1 layer, is designated by an address F.

A final address at the time of recording user data in the user data area is designated by an address Y. An address G represents a position of the record position that undergoes the interlayer jump from the L0 layer to the L1 layer by instructed by the host apparatus. Therefore, a position of the interlayer jump becomes the address G of the L0 layer, and an address G' of the L1 layer.

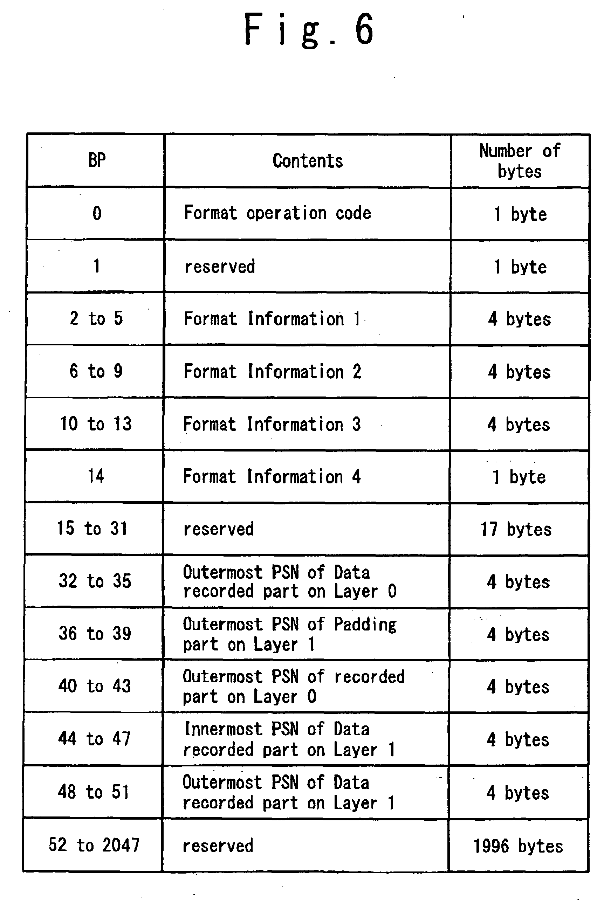

The address Y has been registered as management information of the optical disc 10. In the present invention, the address B, the address D, the address E, and the address F are further registered in a management information area on the optical disc 10 as the management information. The address B is updated with the user data record of the L0 layer.
The address D is updated each time the additional read-out area is formed. The addresses E, F are updated in connection with the user data recording on the L1 layer. The management information area secured in the data read-in area 201 is divided into fields in every 2 K bytes, and retains various pieces of the management information. In the management information area, a block including 32 fields is constructed as a unit. In the present embodiment, as shown in FIG. 6, the management information is registered in the third field (Field 3) among the 32 fields. The address D is stored across four bytes from the 36th byte to the 39th byte in the third field. The address B is stored across four bytes from the 40th byte to the 43rd byte. The address F is stored across four bytes from the 44th byte to the 47th byte. The address E is stored across four bytes from the 48th byte to the 51st byte. Although this field stores the management information in addition to the above, explanation is omitted.

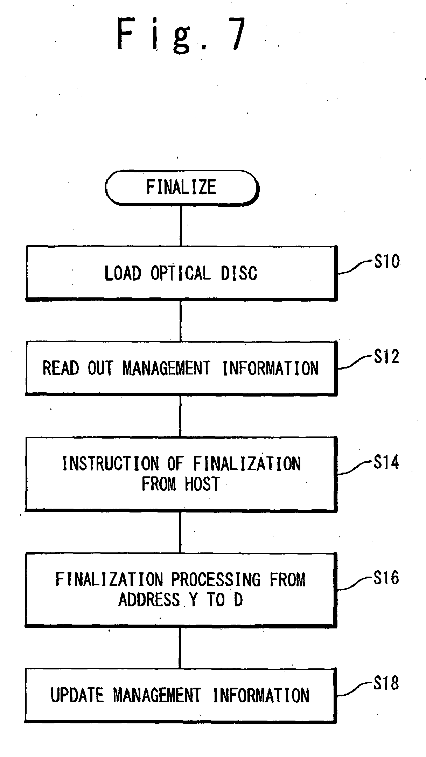

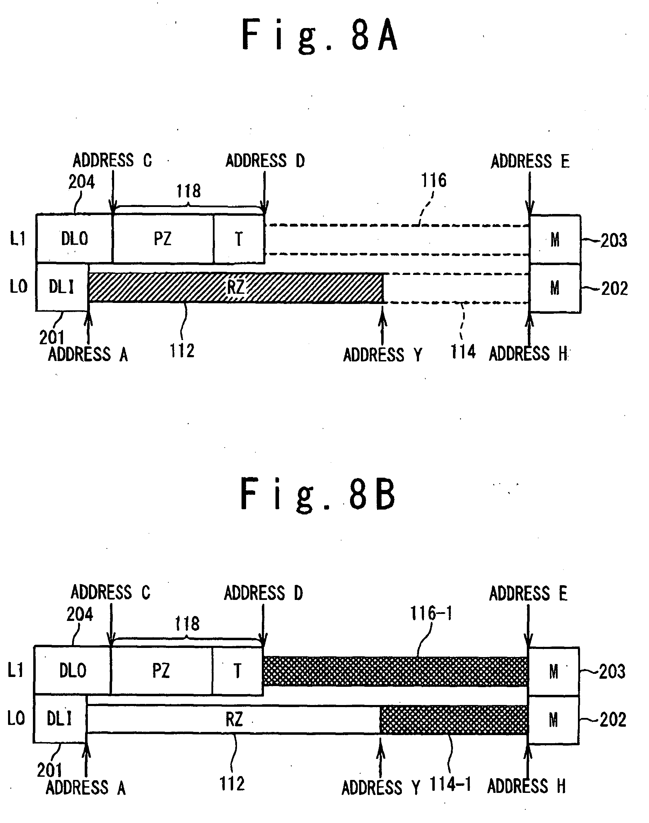

Referring to FIGS. 7 and 8, an operation of the optical disc apparatus at the time of the finalization will be explained. In a case of the rewritable optical disc, such as the HD DVD-RW, the disc is likely to be used many times and there is a high possibility that the record mark has already been formed in the disc. Therefore, in a case of the HD DVD, there is a high possibility that an additional read-out area 118 will be formed in the data recordable area that is adjacent to the outer side of the fixed read-out area 204 formed on the inner side of the data recordable end position (address C) on the L1 layer. The finalization is performed employing this additional read-out area 118.

As shown in FIG. 7, when the optical disc 10 is loaded into the optical disc apparatus (Step S10), the record state information reading unit 55 reads the management information from the management information area formed within the data read-in 201 (Step S12). At this time, suppose the latest recording was performed in an area 112 from the address A to the address Y of the L0 layer on the optical disc 10, as shown in FIG. 8A. Moreover, an area from the address D to the address C constitutes the additional read-out area 118. An area 114 from the address Y to the address H and an area 116 from the address E to the address D are unrecorded areas.

When receiving an instruction of the finalization from the host apparatus (Step S14), the optical disc apparatus starts the finalization processing. That is, the processing determination unit 56 refers to the address D, an outermost position of the additional read-out area 118, which is retained as the management information, and if the address D is registered, it performs the finalization processing on an area from the address Y to the address D (Step S16) . Therefore, as shown in FIG. 8B, an area 114-1 from the address Y to the address H and an area 116-1 from the address E to the address D record predetermined data and become finalized areas, respectively. Usually, when the optical disc is newly subjected to padding at the finalization processing, the padding area is filled with read-out attributes. Then, the optical disc apparatus registers information indicating that the finalization is already finished in the management information area of the optical disc 10, completing the finalization of the optical disc 10 (Step S18).

By excluding the additional read-out area 118 from the address D to the address C from a target area of the finalization processing, a time to record predetermined data in the additional read-out area 118 can be shortened. Note that in the case that the address E is registered as the address D, the finalization processing of the L1 layer is not necessary when the finalization processing is performed next.

When actually the optical disc was inserted into the information recording/reproducing apparatus of the present embodiment and the finalization processing was performed, it took about five minutes for the finalization. When the same optical disc was inserted into the information recording/reproducing apparatus in a related art, it took about 30 minutes for the finalization, being quite a long time. This is because data from the address D to the address C was re-recorded using the record sectors with read-out attribute. That is, the present invention can sharply shorten the finalization processing time.

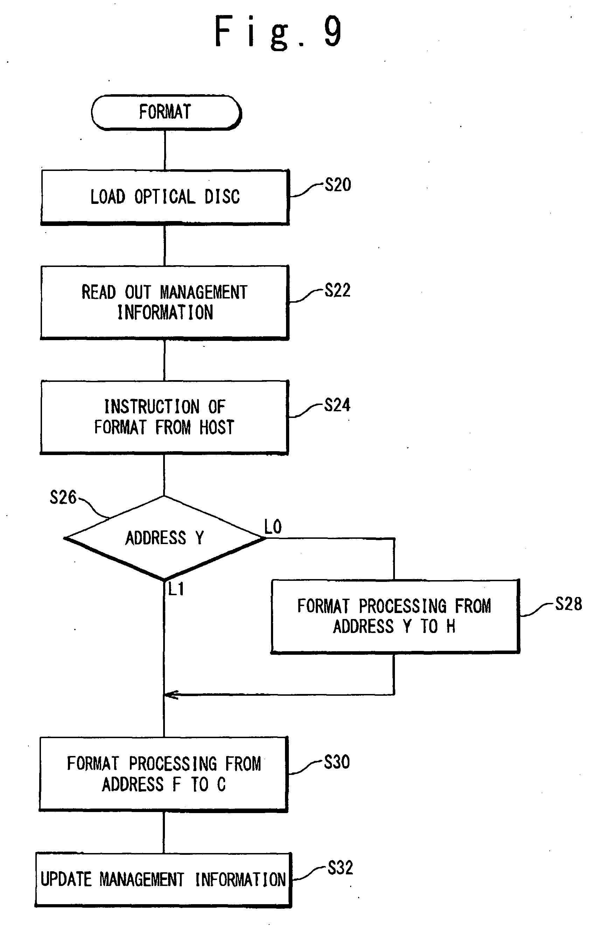

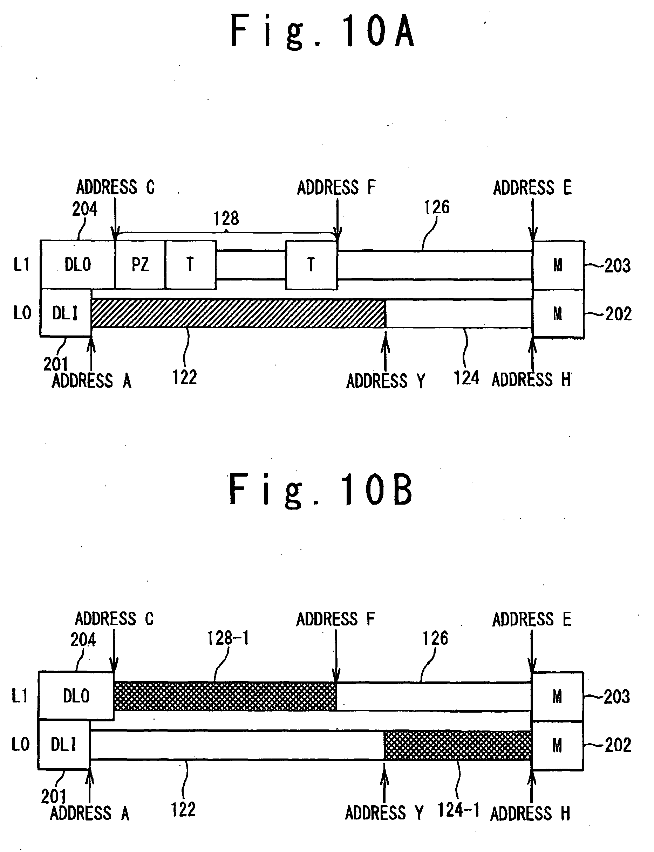

Next, referring to FIGS. 9 and 10, the operation of the optical disc apparatus at the time of formatting will be explained. With the rewritable optical disc, such as the HD DVD-RW, a case is conceivable where a used optical disc is re-formatted and used. In this case, it is often the case where some areas in the disc are already recorded. Conventionally, if it is re-formatted, data indicating to which position the recorded areas exist and the like is lost in the re-formatting. As described above, the format processing is processing of performing the following steps: initializing the management information, forming a necessary area, filling a data area corresponding to the desired storage capacity (capacity that the host apparatus requires) with the record sectors with data attribute, etc.

As shown in FIG. 9, when the optical disc 10 is loaded into the optical disc apparatus 10 (Step S20), a record state information reading unit 55 reads the management information from the management information area formed within the data read-in 201 (Step S22). At this time, as shown in FIG. 10A, suppose the latest recording is performed in an area 122 from the address A to the address Y of the L0 layer on the optical disc 10. An area 128, from the address F to the address C of the L1 Layer, is either a recorded area or unrecorded area. In FIG. 10A, this area is shown as an area where the terminator (T), the additional read-out area (T/PZ), etc. are intermingled.

When receiving an instruction of formatting from the host apparatus (Step S24), the optical disc apparatus will start the format processing. That is, the processing determination unit 56 determines an area that is to be formatted by referring to the address F and the address Y retained as the management information. The address F represents an innermost position of an area that records the user data continuously from the address E on the L1 layer. Therefore, an area 126, which is from the address E to the address F, is excluded from a target area of the format processing because in each sector, the data attribute is set up even when the current format processing is not done.

When the address Y represents an address of the L0 layer (Step S26- L0), the area 122 from the address A to the address Y is filled with the record sectors with data attribute indicating that the user data is recorded. This area 122 is excluded from the target area of the format processing. An area 124 from the address Y to the address H that is on an inner side than the middle area 202 is very likely to be filled with unrecorded areas or record sectors in which an attribute other than the data attribute is set up. Therefore, the optical disc apparatus performs the format processing on the area 124 from the address Y to the address H (Step S28). After that, the processing flow moves to the format processing of the L1 layer.

When the address Y represents an address of the L1 layer (Step S26- L1), the address Y is registered as the address F. When the address Y represents an address of the L0 layer, the address F represents an innermost address in an area where the data attributes are continuous in the previous record. Therefore, the area 126 from the address E to the address F of the L1 layer is an area where the record sectors with data attribute are continuous, and can be excluded from the target area of the format processing. Because of this, the optical disc apparatus performs the format processing on the area 128 from the address F to the address C (Step S30).

By this format processing, as shown in FIG. 10B, an area from the address Y to the address H of the L0 layer is set as a formatted area 124-1, and an area from the address F to the address C of the L1 layer is set as a formatted area 128-1 on the optical disc 10. That is, an area from the address A to the address H of the L0 layer that is the user data area and an area from the address E to the address C of the L1 layer, which is the user data area, become areas where the record sectors with data attribute are continuous. After setting the record sectors of a predetermined area of each of the L0 layer and the L1 layer to be of data attribute, the optical disc apparatus registers information of being already formatted in the management information area of the optical disc 10, completing formatting of the optical disc 10 (Step S32).

When actually the optical disc was loaded into the information recording/reproducing apparatus according to the present embodiment and was formatted, a formatting time was about 30 minutes. When a same disc was loaded into an information recording/reproducing apparatus in a related art and was formatted, it took a very long time, about 60 minutes, to format it. This is because the optical disc was re-recorded from the address E to the address F. That is, it turns out that the present invention has sharply shortened the format processing time.

Thus, the areas (122, 126) each of which is apparent that the record sectors with data attribute are continuous are excluded from the format processing, whereby the format processing time can be shortened. At this time, the address C is registered as the address F. That is, all the record sectors of the L0 layer and the L1 layer can now be able to record new user data.

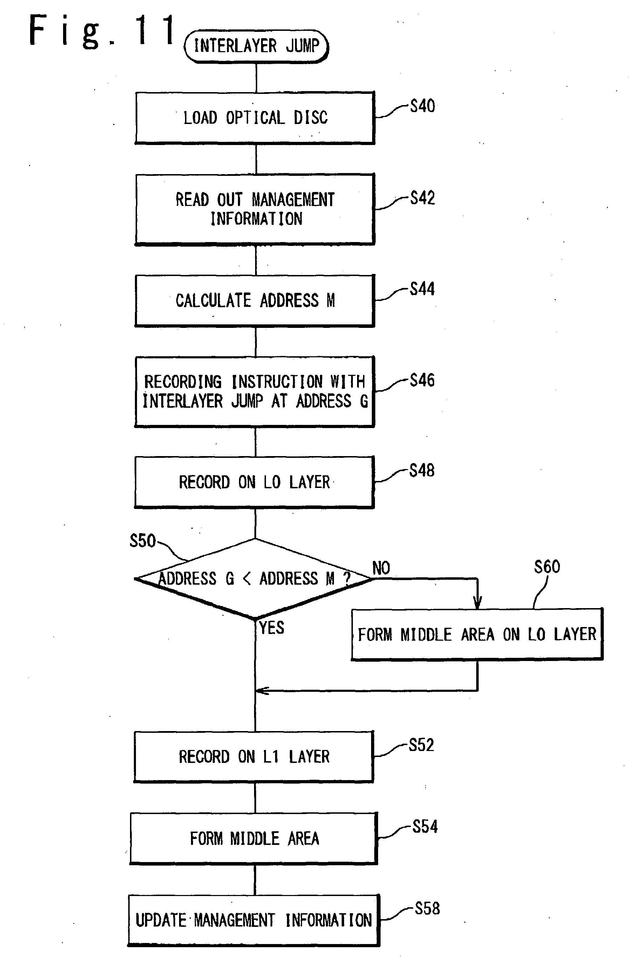

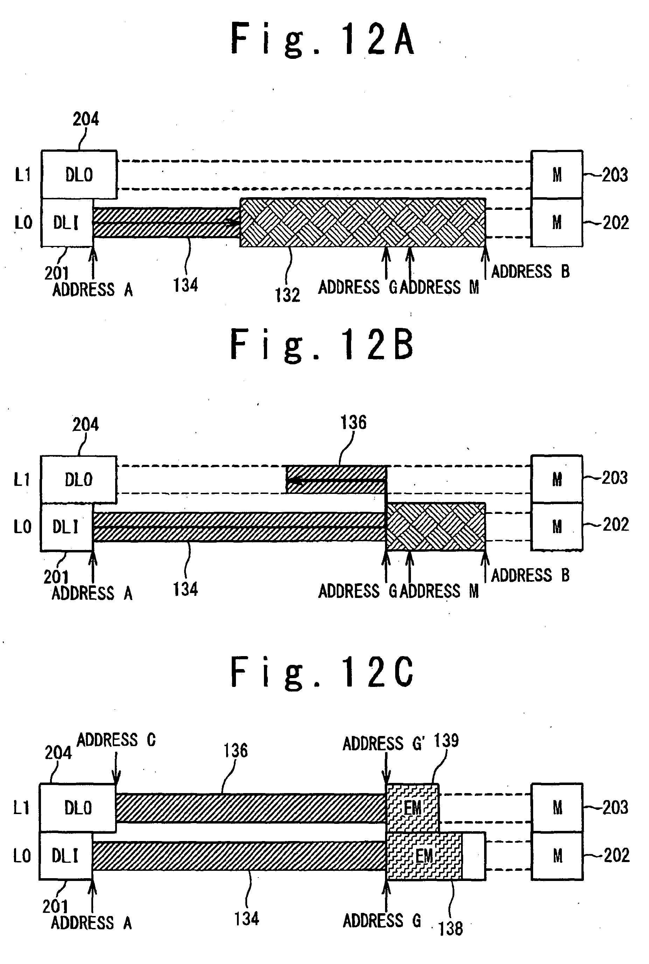

Referring to FIGS. 11 and 12, a smooth switching operation from L0 layer recording to L1 layer recording of the optical disc apparatus will be explained. In the case of a rewritable optical disc, such as the HD DVD-RW, the disc is likely to be used many times and there is a high possibility that the record mark has already been formed in the optical disc 10. Therefore, in the management information area, the record end position (address B) of the recorded area that is continuously recorded from a data recordable head position (address A) of the L0 layer is retained and is employed in the interlayer jump processing.

As shown in FIG. 11, when an optical disc 10 is loaded into the optical disc apparatus (Step S40), the record state information reading unit 55 reads the management information from the management information area formed within the data read-in 201 (Step S42). At this time, suppose an area 132 from the address A to the address B of the L0 layer on the optical disc 10 is in a state of being already recorded. The processing determination unit 56 calculates an address M of the L0 layer at which the L1 layer becomes recordable just after the recording of the L0 layer based on the address B contained in the management information read by the record state information reading unit 55. Suppose that the size of clearance (100 µm) and the length per sector are known, the address M can easily be calculated from the address B (Step S44).

The host apparatus instructs that the user data from the address A to the address G of the L0 layer should be recorded on the L0 layer, the interlayer jump should be made to the L1 layer, and recording should be performed from the address G' to the address C representing the tail position of the data recordable area of the L1 layer (Steps S46). When receiving the instruction of recording of the user data including the interlayer jump from the host apparatus, the optical disc apparatus will start recording from the address A of the L0 layer, as shown in FIG. 12B. The L0 layer has continuously recorded the user data before this and an area up to the address B has become a recorded area. Therefore, the optical disc apparatus will overwrite new user data in the recorded area, up to the address G in an area 134 (Step S48).

Now consider the case where, as shown in FIG. 12A, when the address M exists in a more outer side than the address G, namely, when the address G < the address M holds, the light beam 200 is irradiated at a position of the address G' that is a shift destination of the L1 layer. Since there are only recorded areas in the L0 layer in that path, it is not necessary to form the GAP section on the outer side of the address G of the L0 layer. Therefore, the processing determination unit 56 instructs that the light beam should switch immediately to the recording of the L1 layer from the recording of the L0 layer, as shown in FIG. 12B (Step S50-YES). Thereby, a smooth switching to recording of the L1 layer is realized, and an event that the host apparatus temporarily interrupts the recording on the L1 layer can be prevented.

Then, the optical disc apparatus performs recording up to the address C, which indicates a tail position of the data recordable area of the L1 layer, completing the recording of the user data (Step S52). After that, expanded middle areas 138, 139, which are the GAP sections, on the outer side of the addresses G, G' are formed, so that compatibility with the ROM medium is ensured.

On the other hand, in a case where the address G is located on a more inner side than the address G, namely, when the address G ≥ the address M holds, the clearance is not secured. Therefore, when the light beam 200 is irradiated at a position of the address G' that is a shift destination of the L1 layer, unrecorded areas of the L0 layer are partly included in the path. Therefore, it is necessary to form the GAP section on the outer side of the address G of the L0 layer. Therefore, the processing determination unit 56 instructs formation of the middle area on the outer side of the address G (Step S50-NO). The expanded middle area 138 is formed. At this time, an area from the address B toward the outer side may be made to record the data only by an amount of shortage of the clearance (Step S60).

If the clearance can be secured, recording on the L1 layer will be started from the address G'. The optical disc apparatus records the user data in an area 136 up to the address C indicating the tail position in the data recordable area of the L1 layer (Step S52). Then, the optical disc apparatus ensures compatibility with the ROM medium by forming the expanded middle area 139 that is a GAP section on the outer side of the address G' (Step S54).

By the interlayer jump processing, the optical disc 10 becomes such that the area 134 from the address A to the address G of the L0 layer and the area 136 from the address G' to the address C of the L1 layer become recorded areas that have recorded therein the user data, as shown in FIG. 12C.
Moreover, the expanded middle areas 138, 139, which are the GAP sections, are formed on the outer side of the addresses G, G', so that compatibility with the ROM medium is ensured. The optical disc apparatus registers information that is subjected to the interlayer processing in the management information area on the optical disc 10, completing the user data recording on the optical disc 10 (Step S58).

As described above, in a case of the address G < the address M, the recording on the L1 layer can be started without forming the expanded middle area 138 of the L0 layer, which enables the recording of the L1 layer to be shifted smoothly to the L1 layer. Moreover, the processing time of the interlayer jump processing can also be shortened. In the case of the address G ≥ the address M, the expanded middle area 138 may be formed only by the amount of shortage of the clearance, so that the processing time can be shortened. Alternatively, the following may be adopted: some data is recorded in an area that is short of clearance, the user data is recorded on the L1 layer, and the expanded middle area 138 is formed after the recording of the user data is completed.

This case assumes a case where the address in the L0 layer becomes larger as the record position goes to the more outer side. If the arrangement is reverse to this, a magnitude relation of the address G and the address M in the condition determination becomes reverse. Moreover, an attribute of the record sector in an area from address A to the address B is not asked for.

When actually an optical disc was loaded into the information recording/reproducing apparatus of the present embodiment and recording including the interlayer jump was performed, recording from the address G to the address G' was smoothly performed and the entire recording was completed without making the host apparatus wait. When the same optical disc was loaded into an information recording/reproducing apparatus in a related art, after recording up to the address G, the information recording/reproducing apparatus returned a busy signal to the host apparatus, and temporarily interrupted the user data recording. If the host apparatus has no data buffer, data during the time of interruption is lost and excellent recording will not be attained. That is, the present invention can decrease the load of the host apparatus.

Although in the operation described above, it was explained that the information recording/reproducing apparatus read the management information from the management information area and waited an instruction from the host apparatus, it is conceivable that there may be an instruction such as recording and erasing of other information during that time. Therefore, it is preferable that the management information read from the optical disc 10 is retained in memory incorporated in the system controller 5 or the like and the management information is suitably updated. In that case, calculation of the address M, etc. will be performed after receiving an instruction of processing from the host apparatus. Thus, by making the optical disc apparatus retain the management information, the access time can be shortened than reaccessing the optical disc 10 after instructed by the host apparatus.

The present invention can be adapted to all the wavelengths and NA, without being limited to a wavelength of 405 mm and NA of 0.65. Moreover, in the above, although a class called PR (12221) has been used, other classes, such as PR (1221), can be used similarly. Furthermore, although a case where PRML was used is described, a system not using the PRML can be used similarly.

Still moreover, regarding the physical format of the optical disc, although a case where the in-groove format was used is described in the above embodiments, other physical formats, for example, land groove format in which recording is done in the both of the land and the groove, can be used.

It is apparent that the present invention is not limited to the above embodiments, but may be modified and changed without departing from the scope and spirit of the invention.

## Claims

1. A recording method of an information recording medium comprising:
(a) storing management information indicating a recording status of the information recording medium (10) by recording the management information on a management information area of the information recording medium, wherein the information recording medium has: a first recording layer (12, L0) placed nearer to a source of a laser irradiated to the information recording medium and a recording direction thereof is from an inner side to an outer side of the information recording medium; and a second recording layer (14, L1) a recording direction thereof is from the outer side to the inner side;
(b) reading out the management information from the management information area; and
(c) recording data on the information recording medium by skipping a recording processing to a part of the information recording medium based on the management information.

2. The recording method of the information recording medium according to claim 1, wherein the management information includes a recording end terminal location B of a recorded area where recording processing of the first recording layer (L0) is ended, and
the (a) storing includes:
(a1) registering a continuous recording end terminal location which is an end location of an area where data are continuously recorded from a data recordable head location A indicating a head location of a data recordable area in the first layer as the recording end terminal location B in the management information, when the continuous recording end terminal location is located in an outer side of the recording end terminal location B registered in the management information.

3. The recording method of the information recording medium according to claim 2, wherein the (c) recording includes:
(c1) recording data on the second recording layer (L1) subsequently to a data recording on the first recording layer (L0), and
the (c1) recording comprises:
(cla) judging a procedure of forming a middle area based on the recording end terminal location B;
(clb) forming a middle area (138, 139) after data recording on the second recording layer without forming a middle area (138) before recording data on the second recording layer (L1) based on a result of the (c1a) judging; and
(c1c) forming a middle area (138) before recording data on the second recording layer (L1) based on a result of the (cla) judging.

4. The recording method of the information recording medium according to claim 3, wherein the (c1a) judging includes:
performing the (clb) forming when a start position (G') of recording on the second recording layer (L1) in a radial direction when an interlayer jump is performed from the first recording layer (L0) to the second recording layer (L1) is located in a more inner side than a position of the recording end terminal location B in the radial direction plus a clearance defined to the information recording medium; and
performing the (c1c) forming when a start position (G') of recording on the second recording layer (L1) in the radial direction when an interlayer jump is performed from the first recording layer (L0) to the second recording layer (L1) is not located in a more inner side than a position of the recording end terminal location B in the radial direction plus the clearance.

5. The recording method of the information recording medium according to any of claims 1 to 4, wherein the management information includes an outermost location D indicating a location of an outermost edge of an additional read-out area (118) formed in a location adjacent to an outer edge of a fixed read-out area (204),
an innermost location of the additional read-out area (118) is set to a data recordable end terminal location C indicating an end location of a data recordable area of the second recording layer (L1), and
the (a) storing includes:
(a2) registering the outermost location D to the management information when the additional read-out area (118) is formed.

6. The recording method of the information recording medium according to claim 5, wherein the (c) recording includes:
(c2) finalizing performed so that an unrecorded part not to remain in a determined recordable area, and
the (c2) finalizing comprises:
performing the finalizing to the determined recordable area except the additional read-out area (118) located between the outermost location D and the data recordable end terminal location C, when the outermost location D is registered by the (a2) registering.

7. The recording method of the information recording medium according to any of claims 1 to 4, wherein the management information includes an outermost location E indicating a location where data recording with data attribute to a continuously recorded area (216, 126) in the second recording layer is started, and an innermost location F where data recording with data attribute to the continuously recorded area is finished, and
the (a) storing includes:
registering the outermost location E and the innermost location F to the management information after data recording with data attribute in an area from the outermost location E to the innermost location F.

8. The recording method of the information recording medium according to claim 7, wherein the (c) recording includes:
(c3) formatting to hold a recording area by forming a record mark with data attribute in a predetermined area, and
the (c3) formatting comprises:
formatting the predetermined area except the continuously recorded area from the outermost location E to the innermost location F when the outermost location E and the innermost location F are registered.

9. An information recording and reproducing apparatus comprising:
an optical head configured to record and reproduce by irradiating a beam to an information recording medium (10), wherein the information recording medium has a first recording layer (L0) placed nearer to the optical head (20) and a recording direction thereof is from an inner side to an outer side in a radial direction of the information recording medium and a second recording layer (L1) a recording direction thereof is from the outer side to the inner side;
a control unit (5) configured to record management information indicating a recording status of the information recording medium (10) to a management information area of the information recording medium through the optical head (20);
a recording status information read out unit (55) configured to read out the management information from the management information area by using a reproduction signal outputted from the optical head; and
a processing determination unit (56) configured to determine recording processing in which recording to a part of the information recording medium is skipped.

10. The information recording and reproducing apparatus according to claim 9, wherein the management information includes a recording end terminal location B indicating a location of a recorded area where recording processing of the first recording layer (L0) is ended,
the control unit (5) registers a continuous recording end terminal location which is an end location of an area where data are continuously recorded from a data recordable head location A indicating a head location of a data recordable area in the first recording layer as the recording end terminal location B in the management information, when the continuous recording end terminal location is located in an outer side of the recording end terminal location B registered in the management information.

11. The information recording and reproducing apparatus according to claim 10, wherein the processing determination unit (55) determines whether forming or not forming a middle area (138) before recording data on the second recording layer (L1) based on the recording end terminal location B when an interlayer jump of a recording position from the first recording layer (L0) to the second recording layer (L1) is performed.

12. The information recording and reproducing apparatus according to claim 11, wherein the processing determination unit (55) is configured to determine to perform a data recording on the second recording layer (L1) without forming the middle area (138) when a start position (G') of recording on the second recording layer (L1) in a radial direction when an interlayer jump is performed from the first recording layer (L0) to the second recording layer (L1) is located in a more inner side than a position of the recording end terminal location B in the radial direction plus a clearance defined to the information recording medium (10), and to determine to perform a data recording on the second recording layer (L1) after forming the middle area (138) when the start position is not located in a more inner side than a position of the recording end terminal location B in the radial direction plus the clearance.

13. The information recording and reproducing apparatus according to any of claims 9 to 12, wherein the management information includes an outermost location D indicating a location of an outermost edge of an additional read-out area (118) formed in a location adjacent to an outer edge of a fixed read-out area (204),
an innermost location of the additional read-out area (118) is set to a data recordable end terminal location C indicating an end location of a data recordable area of the second recording layer (L1), and
the control unit (5) registers the outermost location D to the management information when the additional read-out area (118) is formed.

14. The information recording and reproducing apparatus according to claim 13, wherein the processing determination unit (56), when performing a finalization so that an unrecorded part not to remain in a determined recordable area, determines to perform the finalization to the determined recordable area except the additional read-out area (118) located between the outermost location D and the data recordable end terminal location C, when the outermost location D is registered by the control unit (5).

15. The information recording and reproducing apparatus according to any of claims 9 to 12, wherein the management information includes an outermost location E indicating a location where data recording to a continuously recorded area (216, 126) in the second recording layer (L1) where information of data attribute is continuously recorded is started, and an innermost location F where data recording with data attribute to the continuously recorded area is finished, and
the control unit (5) registers the outermost location E and the innermost location F to the management information after the information of the data attribute being continuously recorded in an area from the outermost location E to the innermost location F.

16. The information recording and reproducing apparatus according to claim 15, wherein the processing determination unit (56), when formatting to hold a recording area by forming a record mark indicating a data attribute in a predetermined area, determines to perform formatting of the predetermined area except the continuously recorded area when the outermost location E and the innermost location F are registered.
